# FASCICULE DE BREVET EUROPEEN

(11) **EP 3 123 715 B1**
(45) Date de publication et mention de la délivrance du brevet: **23.12.2020**
(21) Numéro de dépôt: 15717555.5
(22) Date de dépôt: 20.03.2015
(51) Int. Cl.: H04N 7/15, H04L 12/18, H04M 3/56, H04L 29/06

(54) **PROCÉDÉ DE GESTION D'UNE CONFÉRENCE IMPLIQUANT UNE PLURALITÉ DE DISPOSITIFS DE TRAITEMENT DE DONNÉES**
VERFAHREN ZUR VERWALTUNG EINER KONFERENZ MEHREREN DATENVERARBEITUNGSVORRICHTUNGEN
METHOD OF MANAGEMENT OF A CONFERENCE INVOLVING A PLURALITY OF DATA PROCESSING DEVICES

(30) Priorité: 24.03.2014 FR 1452451
(43) Date de publication de la demande: 01.02.2017
(73) Titulaire: ORANGE, 75015 Paris (FR)
(72) Inventeur: GESTRAUD, Yann, 35700 Rennes (FR); BINARD, Fabien, 35000 Rennes (FR)
(86) Numéro de dépôt international: PCT/FR2015/050709
(87) Numéro de publication internationale: WO 2015/145047

(56) Documents cités:
- EP-A1- 2 632 182
- US-A1- 2008 162 633
- US-A1- 2013 198 288

## Description

### Domaine technique

L'invention se rapporte à un procédé de gestion d'une conférence ; la conférence impliquant plusieurs dispositifs de traitement de données reliés par l'intermédiaire d'un réseau de communication.

Les dispositifs visés ci-dessus sont équipés de moyens de communication pour communiquer avec un réseau de communication. Ces dispositifs sont équipés de modules clients respectifs de manière à échanger des messages lors d'une conférence. Un dispositif est par exemple un ordinateur personnel de type PC, une tablette, un téléphone, etc.

### Etat de la technique

Rappelons qu'une conférence est un lieu d'échanges où chaque message émis depuis un dispositif est diffusé à un ensemble de dispositifs connectés à la conférence. La conférence est constituée de "participants", à savoir les utilisateurs finaux qui s'échangent des messages entre eux dans le cadre de la conférence.

Des outils de messagerie, via les outils logiciels de communication SIMPLE IM (sigle anglo-saxon de « Session Initiation Protocol for Instant Messaging and Presence Leveraging Extensions » et de « Instant Messaging ») et CPM (sigle anglo-saxon de « Converged IP Messaging »), tels qu'ils sont définis par l'organisme de standardisation OMA (sigle anglo-saxon de « Open Mobile Alliance »), permettent de réaliser des conférences entre plusieurs modules clients présents sur les dispositifs. La mise en œuvre de conférences par de tels outils logiciels repose sur un nœud central dans le réseau d'un opérateur de télécommunications, à savoir un module de gestion de conférence (le plus souvent désigné par l'expression anglo-saxonne "Controlling Function" par l'homme du métier).

Pour créer une conférence, un module de gestion de conférence crée une instance de conférence mettant en relation des modules clients. Les différents participants peuvent alors échanger des messages.

Le principe de fonctionnement est le suivant :
- Un module client transmet une demande de création d'une conférence au module de gestion de conférence de son opérateur ; la demande inclut une liste de modules clients invités (identifiés par un identifiant partagé par l'ensemble des participants);
- Le module de gestion de conférence crée ensuite une instance de conférence et transmet une invitation à chacun des modules clients invités ; un identifiant de conférence est créé.
- les modules clients invités qui acceptent l'invitation se retrouvent ensuite connectés à l'instance de conférence et deviennent des participants de la conférence.
- Enfin, chaque participant souhaitant communiquer envoie son message à l'instance de conférence géré par le module de gestion à l'origine des invitations, qui le transmet à l'ensemble des autres participants.

Lorsque l'identifiant de conférence est créé, celui-ci peut être conservé par le module client et/ou par le système de conférence ainsi que d'autres informations de contexte telles que la liste des participants, les adresses de joignabilité, pour un usage futur.

Les participants peuvent quitter la conférence à tout moment.

Les règles du cycle de vie de la conférence peuvent varier selon le service. Par exemple, pour économiser les ressources réseaux, l'opérateur hébergeant la conférence peut décider, suite à une certaine période d'inactivité, par exemple due à une absence d'échange de messages, pendant un certain temps défini par l'opérateur, de suspendre la conférence, voire de la supprimer au-delà d'une certaine durée.

Sur reprise d'activité, à savoir lorsqu'un utilisateur souhaite émettre un message, le participant peut transmettre un message à un autre participant en liaison avec l'instance de conférence. Or, dans le cas où l'opérateur a supprimé l'instance de conférence, le module client à l'origine de la demande de redémarrage reçoit en retour un message d'erreur.

L'invention vient améliorer la situation.

Le document US2013/198288 décrit qu'une conférence est planifiée avec une date, une heure de commencement et une heure de fin, et que pendant la durée de la conférence, les données échangées sont stockées dans une mémoire du module de gestion. Les détails de la conférence, i.e. date et heure de début et de fin, sont communiqués aux dispositifs des participants.

Le document US2008/162633 divulgue un serveur de messages instantanés qui permet aux utilisateurs de suspendre un session et de la redémarrer à une date ultérieure.

### L'invention

Selon un aspect fonctionnel, l'invention a pour objet un procédé de gestion tel que défini dans la revendication 1.

Les utilisateurs participants à la conférence ont, grâce à l'invention, connaissance de la durée d'une conférence ou plus précisément de la durée de conservation en mémoire des informations de contexte relatives à une instance de conférence qui sont nécessaires au redémarrage d'une conférence lorsqu'elle a été suspendue. Cela permet d'éviter de transmettre inutilement un message en liaison avec la conférence au module de gestion alors que les informations de contexte relatives à cette conférence ne sont plus accessibles. L'invention évite ainsi certaines situations chaotiques et en conséquence simplifie l'exploitation du réseau, les actions de détection d'anomalie, et le service après-vente.

Le module de gestion est apte à transmettre des invitations respectives à participer à la conférence. Selon un mode de mise en œuvre particulier de l'invention, l'information relative à la durée est transmise dans un message d'invitation à participer à la conférence.

Le module de gestion est apte à transmettre des notifications suite à l'envoi d'invitations à participer à la conférence. Selon un autre mode de mise en œuvre particulier de l'invention l'information relative à la durée est transmise dans une notification relative à une évolution de l'état de la conférence.

Ces deux modes sont avantageux en ce sens que la durée est véhiculée au moyen de messages existants notamment le premier message invitant à participer à une conférence ou un message notifiant d'une évolution relative à la conférence.

Selon un mode de mise en œuvre particulier de l'invention, un message issu d'un dispositif participant à la conférence au-delà de la durée est transformé en une demande de création d'une nouvelle conférence. Grâce à cette caractéristique, le module ayant émis un message alors que la conférence a été supprimée redémarre une nouvelle conférence de façon transparente. Cela réduit le nombre d'opérations liées à une recréation d'une conférence en particulier lorsque la durée a expiré. En effet, cela évite à la fois la réception d'un message d'erreur indiquant que la conférence n'existe plus et une demande de création d'une nouvelle conférence. Grâce à cette caractéristique, une éventuelle création d'une nouvelle conférence est transparente pour un participant à l'origine du message.

Selon un autre aspect matériel, l'invention concerne également un module client tel que défini dans la revendication 4.

Selon un autre aspect matériel, l'invention concerne également un système informatique tel que défini dans la revendication 5.

Selon un autre aspect matériel, l'invention concerne également un programme d'ordinateur comprenant des instructions de code qui, lorsque le programme est exécuté par un processeur, réalise les étapes du procédé de gestion défini ci-dessus. Un tel programme peut utiliser n'importe quel langage de programmation. Il peut être téléchargé depuis un réseau de communication et/ou enregistré sur un support lisible par ordinateur.

L'invention sera mieux comprise à la lecture de la description qui suit, donnée à titre d'exemple et faite en référence aux dessins annexés sur lesquels :
La figure 1 représente un système informatique dans lequel l'invention peut être mise en œuvre selon un mode de réalisation.
Les figures 2a et 2b sont des vues schématiques respectives d'échanges de messages selon le mode de réalisation décrit en référence à la figure 1. Plus précisément, la figure 2a a trait à une création d'une conférence ; la figure 2b a trait à la gestion du cycle de vie de la conférence créée.
La figure 3 est un algorithme donnant le principe général de gestion de la conférence en fonction de la durée de la conférence.

### Description détaillée d'un exemple de réalisation illustrant l'invention

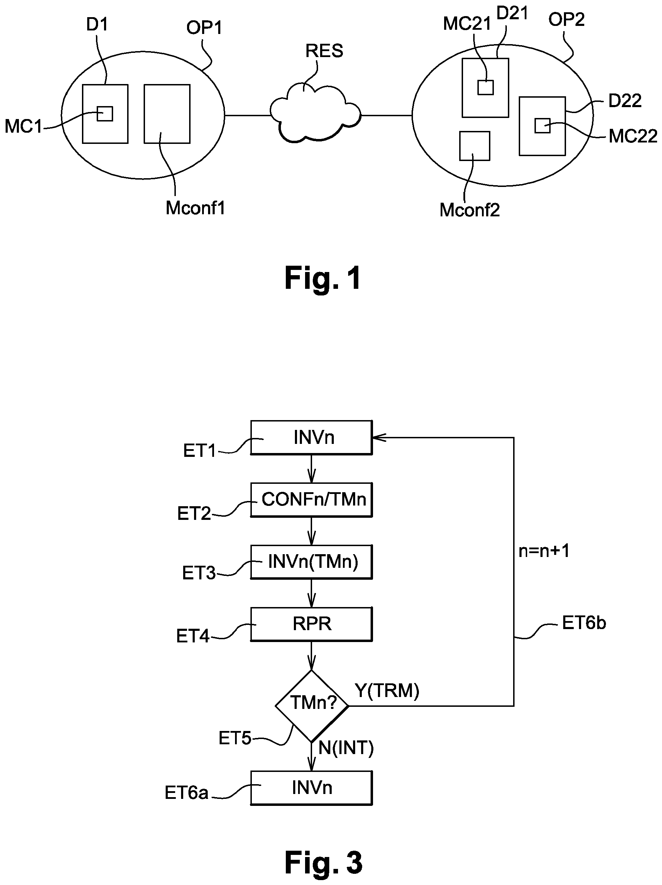

La figure 1 représente un système des gestion SYS comprenant, dans notre exemple, trois dispositifs de de traitement de données (D1,D21,D23). Ces trois dispositifs sont équipés de processeurs respectifs et de mémoires respectives pour le traitement de données. Les dispositifs sont également équipés de ressources physique et logicielles pour communiquer entre eux par le biais d'au moins un réseau de communication RES. Dans notre exemple, le réseau de communication est le réseau Internet.

Dans notre exemple, parmi les trois dispositifs, un dispositif est géré par un premier opérateur de télécommunications OP1, et les deux autres par un second opérateur OP2.

Les dispositifs sont équipés de modules clients MC1, MC21, MC22 respectifs aptes à requérir la création d'une conférence et à gérer l'échange de messages entre les modules clients.

Le système comprend au moins un module de gestion de conférence. Dans notre exemple, chaque opérateur OP1 et OP2 dispose de son propre module de gestion de conférence MConf1 et MConf2, respectivement.

Dans cette configuration, le premier module client MC1 fait appel au premier module de gestion de conférence MConf1, et les modules clients MC21 et MC22 font appel au second module de gestion de conférence MConf2.

On fait ici l'hypothèse que le premier module client MC1 requiert la création d'une conférence dont les participants sont les trois dispositifs, sous-entendus les trois modules clients.

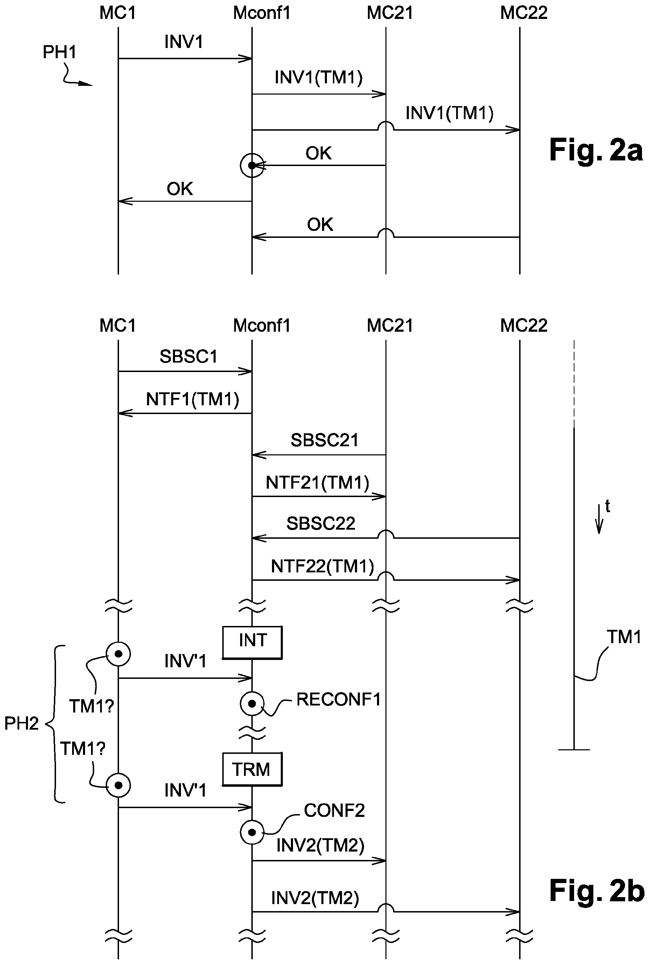

Une demande de création d'une conférence selon un mode de réalisation du procédé de l'invention s'effectue de la façon suivante. Ce mode est décrit en référence aux figures 2a et 2b.

La figure 2a concerne une première phase initiale PH1 qui a trait à la création d'une conférence.

Lors d'une première étape INV1 de cette première phase PH1, le premier module client MC1 requiert INV1 une demande de création d'une conférence au premier module de gestion de conférence MConf1 de son opérateur.

La demande visée ci-dessus inclut, entre autres, au moins une liste de dispositifs invités à participer à la conférence. Une liste inclut par exemple des identifiants URI (sigle anglo-saxon de Uniform Resource Identifier) du type sip:b@mno_B.com et sip:c@mno_C.com 1.

Ensuite, le premier module de gestion MConf1 reçoit la demande de création et gère la création de la conférence lors d'une deuxième étape CONF1. Pour cela, le premier module va créer une instance de conférence.

Suite à la demande création d'une instance, lors d'une troisième étape INV1 (TM1), le premier module MConf1 transmet une invitation à chaque dispositif identifié dans la demande de création issue du premier dispositif.

Dans notre exemple, cette invitation initiale comprend une information relative à la durée TM1 de la conférence CONF1 qui va être créée.

Ensuite, les modules clients MC21 et MC22 reçoivent ces invitations respectivement.

Dans notre exemple, le premier module de gestion transmet aussi la durée TM1 au premier module client MC1 à l'origine de la demande de création.

A noter que, dans notre exemple, les modules ne reçoivent qu'une seule invitation lors de cette première phase PH1.

Lors d'une quatrième étape OK, les modules clients acquittent les invitations reçues. Dans notre exemple, le module de gestion MConf 1 crée une conférence à réception d'au moins une acceptation OK. On suppose ici que les deux modules clients MC21 et MC22 ont émis des messages d'acquittement et que ces messages sont reçus par le module de gestion de conférence MConf1.

A ce stade, la conférence CONF1 est créée et la durée TM1 de conférence CONF1 est connue des participants.

Ensuite, en référence à la figure 2b relative à la gestion du cycle de vie de la conférence, le premier module MC1 transmet au module de gestion de conférence MConf1 une demande de souscription SBSC1 à la conférence CONF1 qui vient d'être créée.

En retour, le premier module MC1 client reçoit un message NTF1(TM1) notifiant au moins la durée TM1 de la conférence.

Dans notre exemple de réalisation, les modules clients MC21 et MC22 émettent également au premier module de gestion MConf1 des demandes de souscription SBSC12 et SBSC22, respectivement. Le module de gestion reçoit ces demandes et transmet des notifications NTF12(TM1) et NTF22(TM1) aux modules clients MC12 et MC22, respectivement. Ces notifications NTF12 et NTF22 incluent dans notre exemple la durée TM1, mais cela n'est nécessaire si les modules ont déjà connaissance de la durée.

On suppose ici que, plus tard, la conférence est devenue inactive ou mise en veille suite à une période d'inactivité/d'inutilisation de la conférence. Il en résulte une suspension (ou interruption) de la conférence. Ce nouvel état est référencé INT sur les figures. Son utilisation demande alors un redémarrage de la conférence CONF1 avec les informations de contexte liées à cette conférence qui ont été conservées en mémoire.

Suite cette période d'inutilisation de la conférence CONF1, un utilisateur va transmettre un message en liaison avec la conférence CONF1. Supposons que cet utilisateur est l'utilisateur du premier dispositif.

Sur la figure 2b, un redémarrage de la conférence a lieu lors d'une deuxième phase PH2. Le procédé de redémarrage de la conférence est le suivant :
Lors d'une première étape (TM1 ?) relative à la deuxième phase PH2, le premier module client MC1 vérifie si la durée TM1 a expiré ou pas.

Si la durée TM1 n'a pas expirée, dans notre exemple, l'instance de la conférence est redémarrée de la manière suivante :
Lors d'une deuxième étape INV1' relative à la deuxième phase PH2, le premier module client MC1 transmet une commande INV1' au premier module de gestion de conférence MConf1. Cette commande INV1', à la différence de la commande initiale INV1 relative à la première phase PH1, inclut l'identifiant de la conférence CONF1

La durée TM1 n'ayant pas expiré, le module de gestion de conférence redémarre RECONF1 la conférence CONF1. A ce stade, l'instance de conférence liée à la conférence CONF1 est de nouveau active ; la conférence CONF1 est donc re-créée.

Supposons que, plus tard, la conférence est supprimée, la durée TM1 ayant expiré. Dans cette configuration, dans notre exemple, une commande invite INV1', identique à celle décrite ci-dessus, reçue par le module de gestion MConf1 est, dans notre exemple, interprétée comme une demande de création d'une nouvelle conférence CONF2. Une création d'une nouvelle conférence CONF2 s'effectue selon les mêmes étapes décrites en référence à la figure 2a. Il en résultera une nouvelle conférence CONF2, et une nouvelle durée TM2, de nouvelles invitations INV2(TM2), et ainsi de suite.

A noter que la commande INV1' émise alors que le délai a expiré peut avoir pour conséquence l'envoi d'un message d'erreur au module client à l'origine du message. Cependant, avantageusement le message est transformé automatiquement en demande de création d'une nouvelle conférence. La transformation étant automatique, cela assura un gain en temps à l'utilisateur souhaitant recréer la conférence. Pour cela, la commande INV1' inclut les informations nécessaires au redémarrage d'une conférence.

Selon une autre variante, la durée TM1 peut être modifiée. La modification résultante est transmise en particulier aux participants pendant la conférence.

La figure 3 est un algorithme relatif au principe de l'invention. Cet algorithme fait bien apparaître la possibilité de redémarrer une conférence CONFn supprimée pendant toute la durée TMn associée à la conférence.

Lors d'une première étape ET1, une demande de création INVN est émise depuis le module de gestion MConf1.

Lors d'une deuxième étape ET2, une conférence MCONFn est créée et une durée TMn associée.

Des invitations INVn(TMn) sont émises à destination de participants, lors d'une troisième étape ET3.

Lors d'une quatrième ET4, on suppose que suite à une période d'inactivité, l'utilisateur du premier dispositif requiert une reprise RPR de la conférence CONFn.

Lors d'une cinquième étape ET5, une vérification est faite.

Si la durée TMn a expiré, et que donc la conférence à été supprimée, lors d'une sixième étape ET6b une nouvelle conférence CONF (n+1) est créée.

Si la durée TMn n'a pas expiré, et que donc la conférence est suspendue, lors d'une sixième étape ET6a la conférence CONFn est redémarrée.

Comme mentionné ci-dessus l'invention peut être mise en œuvre dans la norme GSMA RCS 5.1 incorporé par référence. Ce standard défini plusieurs commandes telles que la commande SIP-INVITE. Cette commande est représentative d'une demande de création d'une conférence (cf. étape INV1 ci-dessus) ; celle-ci est transmise au module de gestion de conférence. Selon une première variante, le module de gestion insère l'information relative à la durée dans les commandes SIP INVITE transmises aux participants. Cette durée est véhiculée par exemple dans un nouvel attribut du header SIP Contribution-Id pour Simple IM, ou Conversation-Id pour CPM..

D'autres commandes sont définies, notamment, la commande SIP-SUBSCRIBE, SIP NOTIFY FULL, SIP NOTIFY PARTIAL.

La commande SIP SUBSCRIBE est transmise par les modules clients souhaitant participer à la conférence.

Après réception des commandes SIP SUBSCRIBE, les participants concernés reçoivent des notifications SIP NOTIFY depuis le module de gestion de conférence MConf1; une première notification SIP NOTIFY FULL et des suivantes SIP NOTIFY PARTIAL qui font suite à des événements relatifs à la conférence comme par exemple l'arrivée d'un nouveau participant. La notification SIP NOTIFY FULL donne des informations sur l'état courant de la conférence (nombre d'utilisateurs, état de chaque utilisateur participant, etc.). La notification SIP NOTIFY PARTIAL donne des informations sur l'évolution de l'état de la conférence.

Les événements visés ci-dessus sont par exemple :
- Connexion d'un nouveau participant à la conférence
- Départ volontaire d'un participant
- Départ involontaire d'un participant
- Ajout d'un nouveau participant

Selon une deuxième variante, dans notre exemple, la durée est véhiculée grâce à une notification SIP NOTIFY FULL et/ou SIP NOTIFY PARTIAL.

Dans notre exemple cette notification est au format XML. L'information relative à la durée de la conférence (conference-lifetime) est ajoutée par le module de gestion de conférence dans une balise XML. L'écriture peut être la suivante :

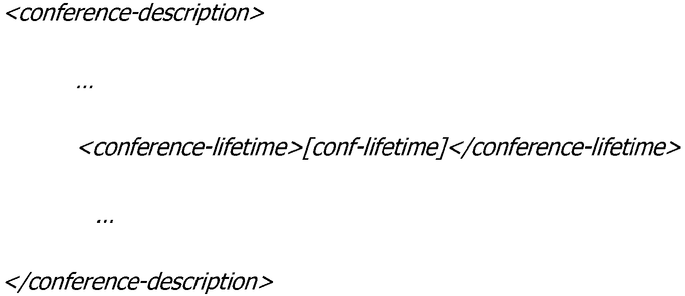

Dans notre exemple, « conference-lifetime » est un attribut qui correspond à la date de fin de la conférence au format UTC (sigle anglo-saxon de Coordinated Universal Time ». Le mode de calcul de la valeur cet attribut est quelconque. La valeur peut être obtenue par addition de la date de création de la conférence et une durée maximum de conférence. La durée maximum est par exemple fournie par le créateur de la conférence par exemple le premier module de gestion en référence à l'exemple décrit ci-dessus.

Selon une variante, l'information relative à la durée peut aussi être une information relative au temps restant. Par exemple, les modules clients reçoivent un attribut indiquant X secondes avant la suppression de la conférence.

Pour la réalisation de l'invention, un module de gestion MConf1 dispose des modules suivants :
- un module d'ajout, dans un message destiné à des modules clients participants à une conférence d'une information liée à la durée relative à la conférence dans l'invitation,
- un module de transmission du message résultant à destination des dispositifs des participants à la conférence.

Pour la réalisation de l'invention, un module client apte à participer à une conférence dispose quant à lui des modules suivants :
a. Un module de réception apte à recevoir une information relative à la durée de la conférence
b. Un module de traitement apte à prendre en compte cette durée avant envoi d'un message relatif à la conférence.

Précisons ici que le terme module utilisé dans la présente demande peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé de gestion d'une participation à une conférence dans un module client, la conférence impliquant plusieurs dispositifs de traitement de données (D1,D12,D22) communiquant entre eux via un réseau de communication (RES), les dispositifs incluant des modules clients respectifs aptes à requérir la création d'une conférence auprès d'un module de gestion de conférence (MConf1), ledit module de gestion mémorisant les informations relatives à une conférence créée pendant une durée donnée, une conférence créée pouvant être suspendue par le module de gestion de conférence après une période d'inactivité des dispositifs faisant partie de la conférence et redémarrée par le module de gestion de conférence après suspension si un message est reçu depuis un dispositif participant à la conférence pendant la durée donnée, **caractérisé en ce qu'**il comprend une étape de réception, par un module client d'un dispositif participant à la conférence, d'une information relative à une durée de mémorisation desdites informations relative à la conférence créée suite à une suspension de conférence, **en ce que** cette durée est prise en compte par le module client d'un dispositif avant envoi d'un message relatif à la conférence au module de gestion, **caractérisé en ce que** lorsque la durée de mémorisation a expiré, l'envoi d'un message relatif à la conférence comprend une étape de transformation du message à transmettre en une commande (INV1') de création d'une nouvelle conférence par le module client à destination du module de gestion de conférence.

2. Procédé de gestion selon la revendication 1, **caractérisé en ce que** le module de gestion est apte à transmettre des invitations (INV) respectives à participer à la conférence, et **en ce que** l'information relative à la durée est transmise dans un message d'invitation à participer à la conférence.

3. Procédé de gestion selon la revendication 1, **caractérisé en ce que** le module de gestion est apte à transmettre des notifications (NOTIFY) suite à l'envoi d'invitations à participer à la conférence, et **en ce que** l'information relative à la durée est transmise dans une notification relative à une évolution de l'état de la conférence.

4. Module client (MC1,MC21,MC22) apte à être inclus dans un dispositif de traitement de données, le module client étant apte à participer à une conférence, une conférence pouvant être suspendue et redémarrée après suspension si la demande de redémarrage est reçue depuis un dispositif participant à la conférence pendant une durée donnée, **caractérisé en ce qu'**il comprend
a. Un module de réception apte à recevoir une information relative à une durée de mémorisation d'informations relatives à la conférence ;
b. Un module de traitement apte à prendre en compte cette durée avant envoi d'un message relatif à la conférence ;
**caractérisé en ce qu'**il comprend aussi un module apte, lorsque la durée de mémorisation a expiré, à transformer un message à transmettre en une commande (INV1') de création d'une nouvelle conférence par le module client à destination du module de gestion de conférence

5. Système informatique comprenant des dispositifs reliés entre eux par l'intermédiaire d'un réseau de communication, les dispositifs incluant des modules clients, le système incluant en outre un module de gestion de conférence tel que défini dans la revendication 1, **caractérisé en ce que** le module client est celui de la revendication 4.

## Patentansprüche

1. Verfahren zur Verwaltung einer Teilnahme an einer Konferenz in einem Client-Modul, wobei die Konferenz mehrere Datenverarbeitungsvorrichtungen (D1, D12, D22) umfasst, die über ein Kommunikationsnetz (RES) miteinander kommunizieren, wobei die Vorrichtungen Client-Module enthalten, die die Erstellung einer Konferenz bei einem Konferenzverwaltungsmodul (MConf1) anfordern können, wobei das Verwaltungsmodul die Informationen bezüglich einer erstellten Konferenz während einer gegebenen Dauer speichert, wobei eine erstellte Konferenz vom Konferenzverwaltungsmodul nach einer Inaktivitätsperiode der zur Konferenz gehörenden Vorrichtungen unterbrochen und vom Konferenzverwaltungsmodul nach der Unterbrechung neu gestartet werden kann, wenn während der gegebenen Dauer eine Nachricht von einer an der Konferenz teilnehmenden Vorrichtung empfangen wird, **dadurch gekennzeichnet, dass** es einen Empfangsschritt, durch ein Client-Modul einer an der Konferenz teilnehmenden Vorrichtung, einer Information bezüglich einer Speicherdauer der Informationen bezüglich der erstellten Konferenz nach einer Konferenzunterbrechung enthält, dass diese Dauer vom Client-Modul einer Vorrichtung vor dem Senden einer Nachricht bezüglich der Konferenz an das Verwaltungsmodul berücksichtigt wird,
dass, wenn die Speicherdauer abgelaufen ist, das Senden einer Nachricht bezüglich der Konferenz einen Schritt der Umwandlung der zu übertragenden Nachricht in einen Befehl (INV1') zur Erstellung einer neuen Konferenz durch das Client-Modul an das Konferenzverwaltungsmodul enthält.

2. Verwaltungsverfahren nach Anspruch 1, **dadurch gekennzeichnet, dass** das Verwaltungsmodul Einladungen (INV) zur Teilnahme an der Konferenz übertragen kann, und dass die Information bezüglich der Dauer in einer Einladungsnachricht zur Teilnahme an der Konferenz übertragen wird.

3. Verwaltungsverfahren nach Anspruch 1, **dadurch gekennzeichnet, dass** das Verwaltungsmodul Benachrichtigungen (NOTIFY) nach dem Senden von Einladungen zur Teilnahme an der Konferenz übertragen kann, und dass die Information bezüglich der Dauer in einer Benachrichtigung bezüglich einer Entwicklung des Zustands der Konferenz übertragen wird.

4. Client-Modul (MC1, MC21, MC22), das in einer Datenverarbeitungsvorrichtung enthalten sein kann, wobei das Client-Modul an einer Konferenz teilnehmen kann, wobei eine Konferenz unterbrochen und nach Unterbrechung neu gestartet werden kann, wenn die Neustartanforderung von einer an der Konferenz teilnehmenden Vorrichtung während einer gegebenen Dauer empfangen wird, **dadurch gekennzeichnet, dass** es enthält
a. ein Empfangsmodul, das eine Information bezüglich einer Speicherdauer von Informationen bezüglich der Konferenz empfangen kann;
b. ein Verarbeitungsmodul, das diese Dauer vor dem Senden einer Nachricht bezüglich der Konferenz berücksichtigen kann;
dass es auch ein Modul enthält, das, wenn die Speicherdauer abgelaufen ist, eine zu übertragende Nachricht in einen Befehl (INV1') zur Erstellung einer neuen Konferenz durch das Client-Modul an das Konferenzverwaltungsmodul umwandeln kann.

5. EDV-System, das Vorrichtungen enthält, die miteinander mittels eines Kommunikationsnetzes verbunden sind, wobei die Vorrichtungen Client-Module enthalten, wobei das System außerdem ein Konferenzverwaltungsmodul wie in Anspruch 1 definiert enthält, **dadurch gekennzeichnet, dass** das Client-Modul dasjenige des Anspruchs 4 ist.

## Claims

1. Method for managing participation in a conference in a client module, the conference involving multiple data processing devices (D1, D12, D22) communicating with one another via a communication network (RES), the devices including respective client modules capable of requesting the creation of a conference from a conference management module (MConf1), said management module storing for a given duration the information relating to a created conference, a created conference being able to be suspended by the conference management module after a period of inactivity of the devices forming part of the conference and restarted by the conference management module after suspension if a message is received from a device participating in the conference during the given duration, **characterized in that** it comprises a step of reception, by a client module of a device participating in the conference, of a piece of information relating to a storage duration of said information relating to the conference, created following a conference suspension, **in that** this duration is taken into account by the client module of a device before sending a message relating to the conference to the management module, **in that**, when the storage duration has expired, sending a message relating to the conference comprises a step of transforming the message to be transmitted into a command (INV1') for the creation of a new conference by the client module to the conference management module.

2. Management method according to Claim 1, **characterized in that** the management module is capable of transmitting respective invitations (INV) to participate in the conference, and **in that** the information relating to the duration is transmitted in a message of invitation to participate in the conference.

3. Management method according to Claim 1, **characterized in that** the management module is capable of transmitting notifications (NOTIFY) following the sending of invitations to participate in the conference, and **in that** the piece of information relating to the duration is transmitted in a notification relating to a change in the status of the conference.

4. Client module (MC1, MC21, MC22) capable of being contained in a data processing device, the client module being capable of participating in a conference, a conference being able to be suspended and restarted after suspension if the restart request is received from a device participating in the conference during a given duration, **characterized in that** it includes
a. A reception module capable of receiving a piece of information relating to a duration of the storage of information relating to the conference;
b. A processing module capable of taking into account this duration before sending a message relating to the conference;
**in that** it also comprises a module capable, when the storage duration has expired, of transforming a message to be transmitted into a command (INV1') for the creation of a new conference by the client module to the conference management module.

5. Computer system including devices connected to one another via a communication network, the devices including client modules, the system further including a conference management module as defined in Claim 1, **characterized in that** the client module is the one from Claim 4.
